Europäisches Patentamt

European Patent Office

Office européen des brevets

(11) Publication number: **0 174 815**
**B1**

# EUROPEAN PATENT SPECIFICATION

(45) Date of publication of patent specification: **28.12.88**

(51) Int. Cl.⁴: **F 16 L 37/10, F 16 L 55/10**

(21) Application number: **85306346.9**

(22) Date of filing: **06.09.85**

(54) **Conduit connecting means.**

(30) Priority: **07.09.84 GB 8422686**

(43) Date of publication of application:
**19.03.86 Bulletin 86/12**

(45) Publication of the grant of the patent:
**28.12.88 Bulletin 88/52**

(84) Designated Contracting States:
**BE DE FR GB IT NL**

(56) References cited:
**EP-A-0 119 289**
**CH-A- 370 605**
**DE-C- 407 455**
**DE-C- 929 165**
**FR-A- 449 656**
**FR-A-1 435 899**
**GB-A- 708 527**

(73) Proprietor: **BRIDON plc**
**Warmsworth Hall**
**Doncaster South Yorkshire DN4 9JX (GB)**

(72) Inventor: **Belk, Alan**
**84 High Storrs**
**Sheffield S11 7LE (GB)**

(74) Representative: **Newby, Martin John et al**
**J.Y. & G.W. Johnson Furnival House 14-18 High**
**Holborn**
**London WC1V 6DE (GB)**

Courier Press, Leamington Spa, England.

## Description

This invention relates to conduit connecting means for releasably connecting a first conduit terminating in a first flange to a second conduit terminating in a second flange. The invention also relates to conduit connecting means for releasably connecting a blanking off member to a flanged conduit and to a system for enabling the connection and disconnection of conduits to a header in a distribution unit of a tank farm.

Tank farms are areas that contain a plurality of storage tanks for the storage of petrochemical products of raw crude oil. They are often situated near refineries and often contain many, e.g. hundreds, of large diameter storage tanks.

Normally a tank farm includes at least one distribution platform or unit to which is connected a plurality, e.g. up to one hundred, storage tanks and a smaller number, e.g. ten, inlet/outlet lines. Liquid hydrocarbon material to be stored in such a tank farm is pumped, e.g. from a tanker at a jetty, into the distribution unit via one of the inlet/outlet lines and is passed from the distribution unit to any selected storage tank. In order to unload the contents of a selected storage tank into, for example, a tanker, a similar procedure is adopted but in reverse—i.e. the contents of the selected storage tank are discharged via the distribution unit into one of the inlet/outlet lines. The distribution unit also allows other operations to be performed. For example liquid hydrocarbon material can be transferred from one storage tank to another via the distribution unit. Alternatively different inlet/output lines can be placed in communication with each other via the distribution unit for transferring liquid hydrocarbon material between, for example, a pair of tankers.

In a typical known distribution unit, the inlet/outlet lines and the tank conduits from the storage tanks terminate in flanges at the distribution unit. A number of headers, each provided with a plurality of flanged outlets, are mounted inside the distribution unit. Flanged connecting conduits are provided to connect a desired header to one or more selected inlet/outlet lines and/or one or more selected storage tank conduits, the flanged outlets of the header which do not have flanged connecting conduits connected thereto being blanked off by means of blanking plates. Typically the flanged outlets of the headers have an internal diameter of approximately 400 mm.

Heretofore in such a known distribution unit it has been considered necessary, for safety purposes, to bolt the blanking plates and the connecting conduits to the various flanged outlets of the headers in order to provide secure, leak-tight closures and connections. However, since each flange connection typically has sixteen bolts, it is a tedious and time-consuming operation to change the connections within the distribution unit.

Another known conduit connecting means is disclosed in CH—A—370605. In this specification there is shown a pair of flanged conduits having male and female members clamped between the flanges. These members have facing cylindrical surfaces and a liquid seal between the latter. Bolts serve the dual function of fixing the male and female members together and releasably clamping the flanged conduits together. Disconnection of bolts results in disconnection of the flanged conduits and disconnection of the male and female members from the conduit flanges.

The present invention has evolved from the need to provide relatively quick and safe couplings for use in the distribution unit of a tank farm. However, the present invention also finds application in any other pressure pipeline incorporating standard flanged conduit connections.

According to a first aspect of the present invention conduit connecting means for releasably connecting a first conduit terminating in a first flange to a second conduit terminating in a second flange, comprising a male part having a radially outwardly facing first cylindrical surface, a female part having a radially inwardly facing second cylindrical surface, fixing means for fixing the male part to said first flange, and the female part to said second flange, and seal means providing a leak-tight radial seal between the male and female parts when the first cylindrical surface is located coaxially within the second cylindrical surface, is characterized in that the conduit connecting means further comprises quick-release retaining means disposed radially outwardly of said fixing means for releasably retaining the first and second conduits in a connected condition with portions of the male and female parts sandwiched between the first and second flanges and with the second cylindrical surface coaxially surrounding the first cylindrical surface.

Conveniently the retaining means comprises first and second bayonet connection means rotatable relative to each other through less than 360°, without relative turning movement between said first and second conduits, between a first position in which the first and second conduits can be disconnected by separation of the conduits so that the first cylindrical surface is axially withdrawn from the surrounding second cylindrical surface and a second position in which disconnection of the first and second conduits is prevented. Preferably the connecting means includes locking means for releasably locking the first and second bayonet connection means in said second position. Conveniently the locking means comprises at least one locking pin.

Alternatively the retaining means may be of different form, e.g. in the form of a quick-release segmented channel-section clamping ring.

Preferably the seal means comprises an annular sealing member retained in an annular groove provided in one of the said cylindrical surfaces, the annular sealing member sealing against the other of the said cylindrical surfaces.

According to a second aspect of the present invention conduit connecting means for blanking-off a conduit terminating in a flange comprising a male part having a radially outwardly facing first cylindrical surface, a female part having a radially inwardly facing second cylindrical surface, fixing means for fixing one of said male and female parts to the said flange, and seal means providing a leak-tight radial seal between the male and female parts when the first cylindrical surface is located coaxially within the second cylindrical surface, is characterised in that the other of said male and female parts forms a blanking off member, and in that the conduit connecting means further comprises quick-release retaining means disposed radially outwardly of said fixing means for releasably retaining the conduit and the blanking-off member in a connected condition with a portion of the said one of said male and female parts sandwiched between the said other of said male and female parts and said flange and with the second cylindrical surface coaxially surrounding the first cylindrical surface.

Preferably the said fixing means comprise bolts.

According to a third aspect of the present invention a distribution system for a tank farm comprising a distribution unit, a plurality of storage tank conduits terminating at said distribution unit, a number of inlet/outlet lines terminating at said distribution unit, a number of header means mounted in the distribution unit and each including a plurality of outlets, detachable blanking-off members for blanking off selected ones of said outlets, and connecting conduits for connection between selected ones of the storage tank conduit terminations and the said outlets and for connection between selected ones of the inlet/outlet line terminations and the said outlets, is characterised in that the connecting conduits and the blanking-off members are releasably connected to said outlets of said header means by means of conduit connecting means according to said first and second aspects of the present invention, respectively.

Embodiments of the invention will now be described, by way of example, with reference to the accompanying drawings, in which:

Figure 1 is a schematic plan of a known distribution unit of a tank farm;

Figure 2 is an end view of one embodiment of a connection system according to the invention, one half of the figure showing the connection of first and second conduits fitted, respectively, with mating female and male parts, the end view being taken on a section through the second conduit, and the other half of the figure showing a blanking member fitted at the end of the first conduit;

Figure 3 is a sectional view, on an enlarged scale, taken on the line III—III of Figure 2; and

Figure 4 is a sectional view, on an enlarged scale, taken on the line IV—IV of Figure 2,

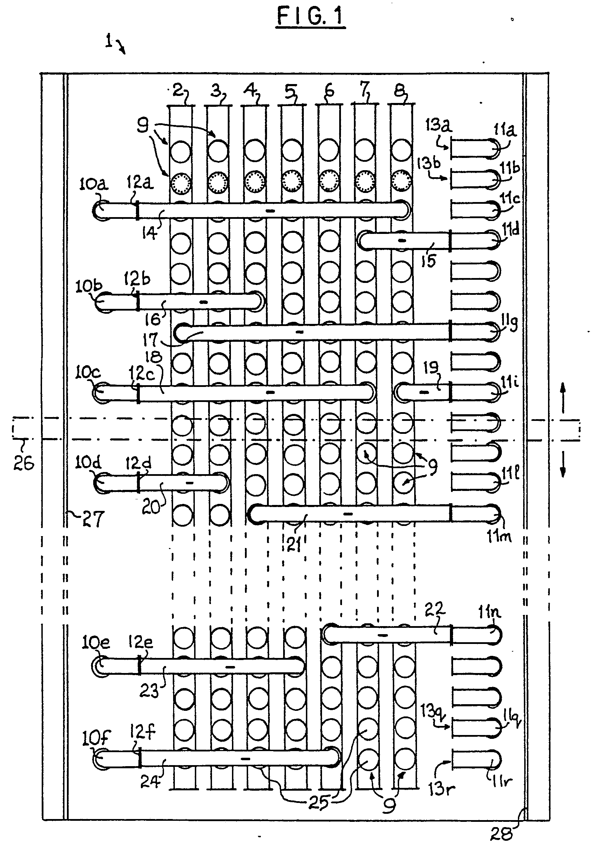

Figure 1 shows a schematic representation of a known distribution platform or unit, generally designated by the reference numeral 1, for a tank farm. The distribution unit 1 comprises a number of headers 2—8 each having a plurality of flanged outlets 9 (only some of which have been assigned a reference numeral in Figure 1), a number of inlet/outlet lines 10a—10f for transporting liquid hydrocarbon material between the distribution unit and, for example, a tanker (not shown) and a plurality of conduits 11a—11r leading to a plurality of storage tanks (not shown) for liquid hydrocarbon material. The inlet/outlet lines 10a—10f terminate at the distribution unit 1 in flanges 12a—12f, respectively, and the conduits 11a—11r terminate at the distribution unit 1 in flanges 13a—13r, respectively. The distribution unit 1 also includes a number of flanged connecting conduits 14—24, one flanged end of each connecting conduit making a flange—flange connection with a chosen flanged outlet 9 and the other flanged end of each connecting conduit making a flange-to-flange connection with either a chosen one of the flanges 12a—12f or a chosen one of the flanges 13a—13r. The connecting conduits are arranged to be moved to any desired location for connection/disconnection by the use of an overhead gantry 26 (shown in chain lines) running on parallel rails 27 and 28. The flanged outlets 9 which have no connecting conduit 14—24 connected thereto are blanked-off by means of blanking plates 25 bolted thereto. In order to simplify Figure 1 the bolts, typically sixteen, for each flange-to-flange connection are not shown and the bolts, also typically sixteen, for clamping the blanking plates 25 to the flanged outlets 9 have only been shown for the plate 25, on each of the headers 2—8, which is in line with the flanged outlet 13b. By way of example only, the flanged outlet 9 and connecting conduits 14—24 typically have an internal diameter of 393.6 mm.

In the distribution unit 1 the inlet/outlet line 10a is connected to the storage tank conduit 11i by means of the connecting conduit 14, the header 8 and the connecting conduit 19; the inlet/outlet line 10b is connected to the storage tank conduit 11m by means of the connecting conduit 16, the header 4 and the connecting conduit 21; the inlet/outlet line 10c is connected to the storage tank conduit 11d by means of the connecting conduit 18, the header 7 and the connecting conduit 15; and the inlet/outlet line 10f is connected to the storage tank conduit 11n by means of the connecting conduit 24, the header 6 and the connecting conduit 22. The inlet/outlet line 10d is connected to the header 3 by means of the connecting conduit 20 and the inlet/outlet line 10e is connected to the header 5 by means of the connecting conduit 23. Connecting conduits (not shown) are provided for connecting the headers 3 and 5 to respective storage tank conduits (not shown) positioned between conduits 11m and 11n. Similarly a conecting conduit (not shown) is provided for connecting an inlet/outlet line (not shown) positioned between the inlet/outlet lines 10d and 10e to the header 2 for connection, via connecting conduit 17, to the storage tank conduit 11g. The distribution unit 1 may include a number of further conduits (not shown) for enabling various other conduit and/or line connections to be made.

Although the distribution unit 1 provides an effective connection system for connecting a selected inlet/outlet line to a selected storage tank conduit, it is a time consuming operation to change connections within the unit. Thus, for example, if it is desired to supply liquid hydrocarbon material from inlet/outlet line 10*b* to storage tank conduit 11*l*, it would be necessary to perform the following operations:—

1. Remove the blanking plate 25 from the flanged outlet 9 on the header 4 in line with conduit 11*l*—an operation involving, typically, the removal of 16 bolts.

2. Disconnect the connecting conduit 21 from its connection to the flange 13*m* and its connection to the flanged outlet on the header 4 in line with conduit 11*m*—operations involving, typically, the removal of 16+16=32 bolts.

3. Connect the removed connecting conduit 21 to the flange 13*l* and the flanged outlet 9 on the header 4 in line with the conduit 11*l*—operations involving, typically the tightening of 16+16=32 bolts.

4. Connect a blanking plate 25 to the flanged outlet 9 on the header 4 in line with the conduit 11*m*—an operation involving, typically, the tightening of 16 bolts.

Thus the four operations referred to above typically involve the tightening or loosening of 96 bolts.

The present invention has evolved out of the need to provide a simplified system for connecting/disconnecting the various inlet/outlet lines, storage tank conduits, connecting conduits and headers of a distribution unit of a tank farm.

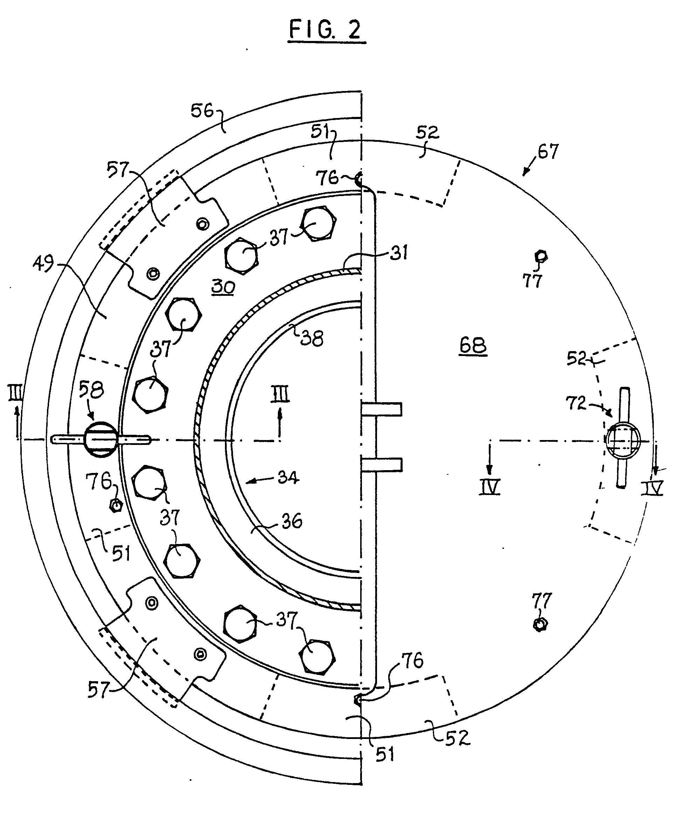

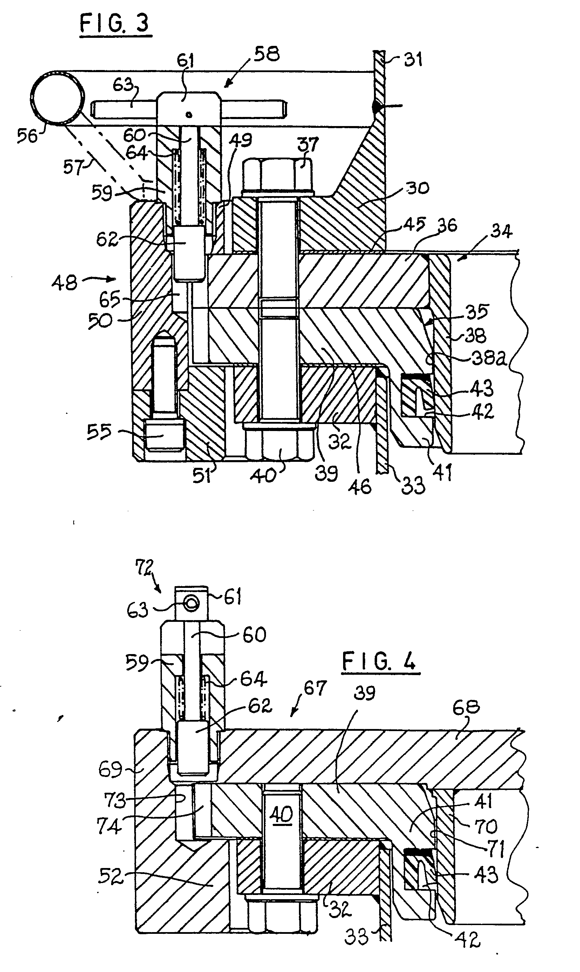

In Figures 2 to 4 there is shown one embodiment of a connecting means according to the invention. In particular, with reference to Figures 2 and 3, the connection system includes a flange 30 at one end of a conduit 31 and a flange 32 connected to a conduit 33. Typically the conduit 31 comprises one of the connecting conduits of a distribution unit of a tank farm, the flange 30 being one of the flanges at either end of such a connecting conduit, and the flange 32 typically comprises either a flanged outlet of a header or one of the flanges at the outlet of an inlet/outlet line or a storage tank conduit of the distribution unit. In this case, each of the conduits 31 and 33 typically has an internal diameter of 393.6 mm.

An annular male part, generally designated 34, is mounted on the flange 30 and an annular female part, generally designated 35, is mounted on the flange 32.

The male part 34 consists of a flange part 36 which is bolted to the flange 30 by a plurality, e.g. sixteen bolts 37 and an axially protruding tubular part 38 which is welded to the flange part 36 around a radially inner circumference of the latter and which typically has an internal diameter of 314 mm. A sealing gasket 45 is positioned between the flange 30 and the flange part 36 and the tubular part 38 has an outer, cylidrical sealing surface 38*a*.

The female part 35 comprises a flange portion 39 bolted to the flange 32 by a plurality, e.g. sixteen, of bolts 40 and, integrally formed with the flange portion 39, a tubular portion 41 extending coaxially within the end of the conduit 33. A sealing gasket 46 is clamped between the flange 32 and the flange portion 39. The tubular portion 41 has an annular recess 42, opening into its radially inner circumferential surface, in which is received an annular lip seal 43. Although not shown in Figure 3, the flange portion 39 has four equally spaced apart arcuate openings formed in its radially outer periphery the purpose of which will be explained hereinafter.

A mounting ring, generally designated 48, is mounted so as to encircle the flange part 36. The ring 48 comprises a flange 49 having an inner diameter less than, and an outer diameter greater than, the outer diameter of the flange part 36 and a cylindrical portion 50 integral with the flange 49. The cylindrical portion 50 is substantially coaxial with the flange 30 and has an inner diameter greater than the outer diameters of the flange part 36 and flange portion 39 which it surrounds. Fixed to the bottom (as viewed in Figure 3) of the cylindrical portion 50 by means of bolts 55 are four equally spaced apart arcuate claws 51 (shown in dashed lines in Figure 2) each having a slightly smaller cross-section, perpendicular to the axes of the conduits 31 and 33, than the previously referred to arcuate openings formed in the flange portion.

A handwheel 56 is mounted on the flange 49 by means of four brackets 57 (only two of which can be seen in Figure 2). The flange 49 also carries at least one, typically two, locking pin arrangements, generally designated 58, the or each locking pin arrangement comprising a cylindrical housing 59 fixed to the flange 49, a spindle 60 coaxially mounted within the housing 59 and connecting a handle block 61 to a locking pin 62, a handle 63 passing through the handle block 61 and a helical spring 64 arranged within the housing 59 around the spindle 60. The top (as viewed in Figure 3) of the housing 59 is bifurcated form, the handle block 61 being positioned between the bifurcations when the locking pin 62 is in a locking position (as shown in Figure 3) and resting on top of the bifurcations when the locking pin 62 is in a release position (similar to that shown in Figure 4 for another part of the connection system) achieved by moving the handle 63 upwardly (as viewed in Figure 3) and then turning the handle 63 through 90° so that the handle block 61 bridges across the bifurcations.

In use, the conduits 31 and 33 are connected together in a leak-tight manner by inserting the projecting tubular part 38 into the cylindrical opening defined by the tubular portion 41 so that the flange part 36 occupies an axial limit position in which it abuts against the flange portion 39 and the cylindrical sealing surface 38*a* make a liquid-tight seal with the annular lip seal 43. In order to enable such an insertion, it is essential to ensure that the mounting ring 48 is rotated into such a position that the arcuate claws 51 (constituting first bayonet connection means) are aligned with the corresponding arcuate openings (constituting second bayonet connection means) formed in the flange portion 39. To assist the insertion, the free end of the tubular part 38 is tapered and the mouth of the cylindrical opening defined by the tubular portion 41 is flared.

On completion of the insertion, the handwheel 56 is turned to rotate mounting ring 48 from the first position, through an angle, e.g. 45°, of less than 360°, into a second position (shown in Figures 2 and 3), in which the arcuate claws 51 are positioned beneath parts of the flange portion 39 located circumferentially between the arcuate openings formed in the latter. Thus when the mounting ring 48 is turned into its second position, axial separation of the flange part 36 and flange portion 39 to break the leak-tight seal between the lip seal 42 and the cylindrical sealing surface 38a is prevented. It will be realised that in order to rotate the mounting ring 48 between its first and second positions, there will need to be a certain degree of axial play possible between the flange part 36 and the flange portion 39 when the ring 48 is in its second position. However the axial extent of the cylindrical sealing surface 38a is sufficient to allow axial play without breaking the liquid-tight seal between the lip seal 42 and the surface 38a.

When the mounting ring 48 is moved into its second position a recess 65 of substantially semi-circular cross-section and opening into the inner cylindrical surface of the cylindrical portion 50 is brought into a position where it faces a similar substantially semi-circular shaped recess 66 opening into the outer cylindrical surface of the flange part 36. The recesses 65 and 66, when so positioned to face each other, define an opening into which the locking pin 62 is received when the latter is moved into its locking position (shown in Figure 3). When the pin 62 is in its locking position rotation of the mounting ring 48 is prevented. In order to rotate the ring 48 back to its first position, it is thus necessary to withdraw the locking pin into its release position. It will, of course be appreciated that the locking pin 62 can only be moved into its locking position when the mounting ring 48 is in its second position.

The connection system described with reference to Figures 2 and 3 thus affords a relatively quick connect/disconnect system for connecting/disconnecting the conduits 31 and 33. Connection/disconnection does not involve the removal/insertion of a plurality of bolts, but instead employs a bayonet-type connection provided by the relatively rotatable arcuate claws 51 and the corresponding arcuate openings formed in the flange portion 39. Operation of the bayonet connection does not involve any relative rotation between the conduits 31 and 33 and their respective flanges 30 and 32.

If instead of connecting a conduit 31 to the conduit 33, it is desired to blank off the conduit 33, a further component, in the form of a blanking member 67 (see Figures 2 and 4), of the connection system is employed.

The blanking member 67 comprises a circular plate portion 68 having an outer cylindrical portion 69 carrying four arcuate claws 52 (shown in dashed lines in Figure 2) which constitute third bayonet connection means. A tubular part 70, having an outer cylindrical sealing surface 71, is mounted coaxially on the circular plate portion 68. Also mounted on the circular plate portion 68 are at least one locking pin arrangement 72 (identical to the locking pin arrangement 58 and having the same reference numerals for identification of the component arts) and a tommy bar 75 for facilitating general handling of the blanking member 67.

In use, the arcuate claws 52 are aligned with the corresponding arcuate openings formed in the flange portion 39 and the tubular portion 70 is inserted into the cylindrical opening defined by flange portion 41 so that the flange portion 39 abuts against the circular plate portion 68 and the lip seal 42 make a leak-tight seal against the cylindrical sealing surface 71. The blanking member 67 is then rotated, e.g. by turning the tommy bar 75, through an angle, e.g. 45°, less than 360° from a first position into a second position in which the claws 52 are positioned beneath (as viewed in Figure 4) parts of the flange portion 39 disposed circumferentially between the arcuate openings formed in the latter. When positioned in its second position, the or each locking pin arrangement 72 can be actuated so that the or each locking pin 62 is moved from a release position into a locking position in which it is received in an opening defined by a semi-circular recess 73, opening into the inner cylindrical surface of the cylindrical portion 69, and a correspondingly shaped semi-circular recess 74 formed in the outer circumferential surface of the flange portion 39.

It will be appreciated that the blanking member 67 affords a quick means of blanking off the conduit 33 employing a bayonet-type connection provided by the arcuate claws 52 and the corresponding arcuate openings formed in the flange portion 39.

In order to provide free rotation of the mounting ring 48 and the blanking member 67, the confronting relatively rotatable surfaces of the connecting components of the connection system should be well greased. For this purpose, as can be seen in Figure 2, grease nipples 76 and 77 are provided in the mounting ring 48 and the circular plate portion 68, respectively.

An important feature of the connecting means described herein is that it can be employed for connections involving standard flanged pipelines with little or no modification of the existing flanged conduits. In particular a standard coupling between a pair of flanged conduits bolted together can be easily replaced by connecting means according to the invention to provide a quick-release connection between the flanged conduits. Furthermore the "cartridge type" form of the connecting means ensures that the coupling takes up a relatively small amount of space, the conduit connection only being increased in the axial direction by the thickness of the sandwiched flanges 36 and 39 (see Figure 3) or flange 39 (see Figure 4). This is particularly important in the replacement of conventional flanged connections by connecting means according to the invention in a distribution platform or unit for a tank farm where an overhead gantry 26 runs over the unit, since any great increase in height of a connection to any of the flanged outlets 9 could lead to fouling of the gantry.

The connecting means may be modified in a number of ways. For example the annular seal 43 need not, of course, be provided in the female part 35. Instead the male part 34 may be modified to receive an annular lip seal for making sealing engagement with the cylindrical surface of the female part. Similarly the blanking member 67 could, of course, be modified in a similar manner by the provision of a lip seal. Any convenient type of annular seal, e.g. O-ring seals or self-energised seals (as shown), may be employed.

Other modifications (not shown) include the provision of different numbers of "bayonets" for each bayonet connection—although at least two such "bayonets" must be provided if bayonet connections are employed, and the provision of actuating means, e.g. hydraulic cylinder means, for rotating a component part of each bayonet-type connection. Alternatively a segmented clamping ring having wedging engagement with the conduit flanges may be employed as a quick-release retaining means.

## Claims

1. Conduit connecting means for releasably connecting a first conduit (31) terminating in a first flange (30) to a second conduit (33) terminating in a second flange (32), comprising a male part (34) having a radially outwardly facing first cylindrical surface (38a), a female part (35) having a radially inwardly facing second cylindrical surface, fixing means (37) for fixing the male part (34) to said first flange (30) and the female part (35) to said second flange (32), and seal means (43) providing a leak-tight radial seal between the male and female parts (34 and 35) when the first cylindrical surface (38a) is located coaxially within the second cylindrical surface, characterised in that the conduit connecting means further comprises quick-release retaining means (48) disposed radially outwardly of said fixing means for releasably retaining the first and second conduits (31 and 33) in a connected condition with portions (36 and 39) of the male and female parts (34 and 35) sandwiched between the first and second flanges (30 and 32) and with the second cylindrical surface coaxially surrounding the first cylindrical surface (38a).

2. Conduit connecting means according to claim 1, characterised in that the retaining means (48) comprises first and second bayonet connection means (51, 39) rotatable relative to each other through less than 360°, without relative turning movement between said first and second conduits (31, 33), between a first position in which the first and second conduits can be disconnected by separation of the conduits so that the first cylindrical surface (38a) is axially withdrawn from the surrounding second cylindrical surface and a second position in which disconnection of the first and second conduits (31, 33) is prevented.

3. Conduit connecting means according to claim 2, characterised in that locking means (58) are provided for releasably locking the first and second bayonet connection means in said second position.

4. Conduit connecting means according to claim 3, characterised in that the locking means (58) comprise at least one locking pin (62).

5. Conduit connecting means according to claim 1, characterised in that the quick-release retaining means comprises a segmented clamping ring, e.g. of channel section.

6. Conduit connecting means according to any of the preceding claims, characterised in that the seal means comprises an annular sealing member (43) retained in an annular groove (42) provided in one of the said first and second cylindrical surfaces, the annular sealing member (43) sealing against the other of said first and second cylindrical surfaces.

7. Conduit connecting means for blanking-off a conduit (33) terminating in a flange (32), comprising a male part (67) having a radially outwardly facing first cylindrical surface, a female part (35) having a radially inwardly facing second cylindrical surface, fixing means (40) for fixing one of said male and female parts to the said flange (32), and seal means (43) providing a leak-tight radial seal between the male and female parts whsn the first cylindrical surface is located coaxially within the second cylindrical surface, characterised in that the other of said male and female parts forms a blanking-off member (67), and in that the conduit connecting means further comprises quick-release retaining means (52, 69) disposed radially outwardly of said fixing means for releasably retaining the conduit (33) and the blanking-off member (67) in a connected condition with a portion (39) of the said one of the male and female parts sandwiched between the said other of said male and female parts and said flange (32) and with the second cylindrical surface coaxially surrounding the first cylindrical surface.

8. Conduit connecting means according to any of the preceding claims, characterised in that the said fixing means comprise bolts (37 and/or 40).

9. A distribution system for a tank farm comprising a distribution unit (1), a plurality of storage tank conduits (11a—11r) terminating in flanges (13a—13r) at said distribution unit, a number of inlet/outlet lines (10a—10f) terminating in flanges (12a—12f) at said distribution unit (1), a number of header means (2—8) mounted in the distribution unit (1) and each including a pluraltiy of flanged outlets (9), detachable blanking-off members (25) for blanking off selected ones of said flanged outlets, and flanged connecting conduits (14—24) for connection between selected ones of the storage tank conduit terminating flanges

(13*a*—13*r*) and the said flanged outlets (9) and for connection between selected ones of the inlet/outlet line terminating flanges (12*a*—12*f*) and the said flanged outlets (9), is characterised in that each flange-to-flange connection between a connecting conduit (14—24) and a flanged outlet (9) is provided by conduit connecting means according to any of claims 1 to 6 and in that each connection between a blanking-off member (25) and a flanged outlet (9) is provided by conduit connecting means according to claim 7.

**Patentansprüche**

1. Rohrverbindungsmittel zur lösbaren Verbindung eines ersten Rohres (31), das durch einen ersten Flansch (30) endet, mit einem zweiten Rohr (33), das durch einen zweiten Flansch (32) endet, umfassend ein männliches Teil (34) mit einer radial nach außen gerichteten, ersten zylindrischen Fläche (38*a*), ein weibliches Teil (35) mit einer radial nach innen gerichteten, zweiten zylindrischen Fläche, Befestigungsmittel (37), um das männliche Teil (34) an jenem ersten Flansch (30) und das weibliche Teil (35) an jenem zweiten Flansch (32) zu befestigen, und Dichtungsmittel (43), die eine lecksichere, radiale Abdichtung zwischen den männlichen und weiblichen Teilen (34 und 35) herstellen, wenn die erste zylindrische Fläche (38*a*) sich koaxial innerhalb der zweiten zylindrischen Fläche befindet, dadurch gekennzeichnet, daß die Rohrverbindungsmittel weiterhin schnellösende Haltemittel (48) aufweisen, die radial außerhalb besagter Befestigungsmittel angeordnet sind, um die ersten und zweiten Rohre (31 und 33) in verbundenem Zustand mit Teilstücken (36 und 39) der männlichen und weiblichen Teile (34 und 35) lösbar zu halten, die zwischen den ersten und zweiten Flanschen (30 und 32) liegen, wobei die zweite zylindrische Fläche die erste zylindrische Fläche (38*a*) koaxial umgibt.

2. Rohrverbindungsmittel nach Anspruch 1, dadurch gekennzeichnet, daß die Haltemittel (48) erste und zweite Bajonettverbindungsmittel (51, 39) aufweisen, die relativ zueinander um weniger als 360° ohne relative Drehbewegung zwischen jenen ersten und zweiten Rohren (31, 33) von einer ersten Stellung drehbar sind, in der die ersten und zweiten Rohre durch Trennung der Rohre gelöst werden können, so daß die erste zylindrische Fläche (38*a*) von der sie umgebenden zweiten zylindrischen Fläche axial zurückgezogen wird, zu einer zweiten Stellung, in der verhindert wird, daß die ersten und zweiten Rohre (31, 33) sich lösen können.

3. Rohrverbindungsmittel nach Anspruch 2, dadurch gekennzeichnet, daß Arretiermittel (59) vorgesehen sind, um die ersten und zweiten Bajonettverbindungsmittel in dieser zweiten Stellung lösbar zu arretieren.

4. Rohrverbindungsmittel nach Anspruch 3, dadurch gekennzeichnet, daß die Arretiermittel (58) mindestens einen Arretierbolzen (62) enthalten.

5. Rohrverbindungsmittel nach Anspruch 1, dadurch gekennzeichnet, daß die schnellösenden Haltemittel einen Segment-Klemmring aufweisen, z.B. mit U-Profil.

6. Rohrverbindungsmittel nach einem der vorhergehenden Ansprüche, dadurch gekennzeichnet, daß die Dichtungsmittel ein ringförmiges Dichtungsteil (43) umfassen, das sich in einer ringförmigen Rille (42) befindet, die in einer jener ersten und zweite zylindrischen Flächen vorgesehen ist, wobei das ringförmige Dichtungsteil (43) gegen die andere der ersten und zweiten zylindrischen Flächen abdichtet.

7. Rohrverbindungsmittel zum Abschließen eines Rohres (33), das durch einen Flansch (32) endet, umfassend ein männliches Teil (67) mit einer radial nach außen gerichteten, ersten zylindrischen Fläche, ein weibliches Teil (35) mit einer radial nach innen gerichteten, zweiten zylindrischen Fläche, Befestigungsmittel (40), um eines der männlichen und weiblichen Teile an besagtem Flansch (32) zu befestigen, und Dichtungsmittel (43), die eine lecksichere, radiale Abdichtung zwischen den männlichen und weiblichen Teilen herstellen, wenn die erste zylindrische Fläche sich koaxial innerhalb der zweiten zylindrischen Fläche befindet, dadurch gekennzeichnet, daß das andere jener männlichen und weiblichen Teile ein Abschlußteil (67) bildet, und daß die Rohrverbindungsmittel weiterhin schnellösende Haltemittel (52, 69) aufweisen, die radial außerhalb besagter Befestigungsmittel angeordnet sind, um das Rohr (33) und das Abschlußteil (67) in verbundenem Zustand mit einem Teilstück (39) eines der männlichen und weiblichen Teile lösbar zu halten, die zwischen dem anderen jener männlichen und weiblichen Teile und dem Flansch (32) liegen, wobei die zweite zylindrische Fläche die erste zyindrische Fläche koaxial umgibt.

8. Rohrverbindungsmittel nach einem der vorhergehenden Ansprüche, dadurch gekennzeichnet, daß besagte Befestigungsmittel Bolzen umfassen (37 und/oder 40).

9. Verteilungssystem für eine Tankanlage, umfassend eine Verteilungseinheit (1), mehrere Lagertankrohre (11*a*—11*r*), die durch Flansche (13*a*—13*r*) an besagter Verteilungseinheit enden, eine Anzahl von Einlaß-/Auslaß-leitungen (10*a*—10*f*), die durch Flansche (12*a*—12*f*) an besagter Verteilungseinheit (1) enden, eine Anzahl von Sammelrohren (2—8), die in der Verteilungseinheit (1) montiert sind und jeweils mehrere geflanschte Auslässe (9) enthalten, abnehmbare Abschlußteile (25), um ausgewählte, geflanschte Auslässe abzuschließen, und geflanschte Verbindungsrohre (14—24) zur Verbindung zwischen ausgewählten Lagertankrohr-Endflanschen (13*a*—13*r*) und besagten geflanschten Auslässen (9) sowie zur Verbindung zwischen ausgewählten Einlaß-/Auslaßleitung-Endflanschen (12*a*—12*f*) und besagten geflanschten Auslässen (9), dadurch gekennzeichnet, daß jede Flansch-an-Flansch-Verbindung zwischen einem Verbindungsrohr (14—24) und einem geflanschten Auslaß (9) durch Rohrverbindungsmittel nach einem der Ansprüche 1 bis 6 vorgesehen ist, und daß jede Verbindung zwischen einem Abschlußteil (25) und einem geflanschten Auslaß (9) durch Rohrverbindungsmittel nach Anspruch 7 vorgesehen ist.

**Revendications**

1. Raccord pour tuyaux pour relier, de façon détachable, un premier tuyau (31) se terminant dans une première bride (30), à un second tuyau (33) se terminant dans une seconde bride (32), comprenant une partie mâle (34) ayant une première surface cylindrique (38a), tournée radialement vers l'extérieur, et une partie femelle (35) ayant une seconde surface cylindrique, tournée radialement vers l'intérieur, des moyens de fixation (37) pour fixer la partie mâle (34) à ladite première bride (30) et la partie femelle (35) à ladite seconde bride (32), et des moyens étanches de fermeture (43) assurant un joint d'étanchéité radial aux fuites entre les parties mâle et femelle (34 et 35) lorsque la première surface cylindrique (38a) est montée co-axialement dans la seconde surface cylindrique, caractérisé en ce que le raccord pour tuyaux comporte, en outre, des moyens de retenue à desserage rapide (48) disposés radialement vers l'extérieur desdits moyens de fixation pour retenir, de façon détachable, le premier et le second tuyaux (31 et 33) en condition de raccordement avec des sections (36 et 39) des parties mâle et femelle (34 et 35) intercalées entre les première et seconde brides (30 et 32), la seconde surface cylindrique entourant co-axialement la première surface cylindrique (38a).

2. Raccord pour tuyaux selon la revendication 1, caractérisé en ce que les moyens de retenue (48) comportent un premier et un second moyens de raccordement à baïonnette (51, 39) pouvant tourner l'un par rapport à l'autre au-dessous de 360°, sans mouvement relatif tournant entre lesdits premier et second tuyaux (31, 33), entre une première position dans laquelle les premier et second tuyaux peuvent être détachés par séparation des tuyaux de telle sorte que la première surface cylindrique (38a) soit retirée axialement de la seconde surface cylindrique qui l'entoure et une seconde position, dans laquelle la séparation des premier et second tuyaux (31, 33) est empêchée.

3. Raccord pour tuyaux selon la revendication 2, caractérisé en ce que les moyens de verrouillage (58) sont prévus pour assurer le verrouillage de façon détachable des premier et second moyens de raccordement à baïonnette dans ladite second position.

4. Raccord pour tuyaux selon la revendication 3, caractérisé en ce que les moyens de verrouillage (58) comportent au moins un goujon de blocage (62).

5. Raccord pour tuyaux selon la revendication 1, caractérisé en ce que les moyens de retenue à desserrage rapide comportent une bague de serrage segmentée, c'est-à-dire de section en U.

6. Raccord pour tuyaux selon l'une quelconque des revendications précédentes, caractérisé en ce que les moyens étanches de fermeture comportent un élément d'étanchéité annulaire (43) retenu dans une rainure annulaire (42) ménagée dans l'une desdites première et seconde surfaces cylindriques, l'élément d'étanchéité annulaire (43) portant de façon étanche contre l'autre desdites première et seconde surfaces cylindriques.

7. Raccord pour tuyaux pour l'obturation d'un tuyau (33) se terminant dans une bride (32), comportant une partie mâle (67) ayant une première surface cylindrique tournée radialement vers l'extérieur, une partie femelle (35) ayant une seconde surface cylindrique tournée radialement vers l'intérieur, des moyens de fixation (40) pour fixer l'une desdites parties mâle et femelle à ladite bride (32), et des moyens d'étanchéité (43) assurant un joint d'étanchéité radial aux fuites entre les parties mâle et femelle lorsque la première surface cylindrique est logée co-axialement dans la seconde surface cylindrique, caractérisé en ce que l'autre desdites parties mâle et femelle forme un élément d'obturation (67), et en ce que le raccord pour tuyaux comporte en outre des moyens de retenue à desserrage rapide (52, 69) disposés radialement vers l'extérieur desdits moyens de fixation pour retenir, de façon détachable, le tuyau (33) et l'élément d'obturation (67) en condition de raccordèment avec une partie (39) de l'une desdites parties mâle et femelle intercalée entre l'autre desdites parties mâle et femelle et ladite bride (32), la seconde surface cylindrique entourant co-axialement la première surface cylindrique.

8. Raccord pour tuyaux selon l'une quelconque des revendications précédentes, caractérisé en ce que lesdits moyens de fixation comportent des boulons (37 et/ou 40).

9. Un système de distribution pour un réservoir agricole comprenant un bloc de distribution (1), une pluralité de tuyaux de réservoir de stockage (11a—11r) se terminant dans des brides (13a—13r) dans ledit bloc de distribution, un certain nombre de conduites d'entrée/sortie (10a—10f) se terminant dans des brides (12a—12f) dans ledit bloc de distribution (1), un certain nombre de moyens collecteurs (2—8) montés dans le bloc de distribution (1) et comportant chacun une pluralité de sortie à brides (9), des éléments d'obturation (25) pouvant être détachés pour l'obturation de l'une choisie desdites sorties à brides, et des tuyaux de raccordement à brides (14, 24) pour le raccordement de l'un choisi des tuyaux de réservoir de stockage se terminant dans des brides (13a—13r) et lesdites sorties à brides (9) et pour le raccordement de l'une choisie des conduites d'entrée/sortie se terminant dans des brides (12a—12f) et lesdites sorties à brides (9), caractérisé en ce que chaque raccordement de bride à bride entre un tuyau de raccordement (14, 24) et une sortie à brides (9) est assuré par un raccord pour tuyaux conforme à l'une quelconque des revendications 1 à 6 et en ce que chaque raccordement entre un élément d'obturation (25) et une sortie à brides (9) est assuré par un raccord pour tuyaux selon la revendication 7.

8

EP 0 174 815 B1

F I G. 1

EP 0 174 815 B1

FIG. 2

FIG. 3

FIG. 4